# EUROPÄISCHE PATENTANMELDUNG

(11) **EP 0 630 738 A2**
(43) Veröffentlichungstag der Anmeldung: **28.12.1994**
(21) Anmeldenummer: 94107333.0
(22) Anmeldetag: 11.05.1994
(51) Int. Cl.: B29C 65/22, B29C 65/18

(54) **Schweisselement für die Folienschweissung**

(30) Priorität: 03.06.1993 DE 4318415
(71) Anmelder: Optima-Maschinenfabrik Dr. Bühler GmbH & Co., D-74523 Schwäbisch Hall (DE)
(72) Erfinder: Marwitz, Gustav, D-74653 Künzelsau-Gaisbach (DE)
(74) Vertreter: Patentanwälte Ruff, Beier, Schöndorf und Mütschele

(57) **Zusammenfassung**

Die Erfindung betrifft ein Schweißelement (3) für Folienschweißmaschinen. Das Schweißelement weist einen langgestreckten elektrischen Heizleiter (7) und einen diesen stützenden Träger (6) auf. Dabei ist der Heizleiter (7) über seine gesamte Länge vollflächig fest mit dem Träger (6) verbunden. Der Heizleiter kann zusammen mit dem Träger an Schweißbacken (1) leicht auswechselbar befestigt werden.

## Beschreibung

Die Erfindung betrifft ein Schweißelement für die Folienschweißung mit einem langgestreckten elektrischen Heizleiter und einem diesen stützenden Träger.

Bei bekannten Folienschweißmaschinen ist als Heizleiter normalerweise ein Schweißdraht vorgesehen, der elektrisch beheizt wird und in erhitztem Zustand gegen miteinander zu verschweißende Folienlagen gedrückt wird. Je nach Gegenfläche wird dabei eine Verbindungsnaht oder Trennschweißnaht erhalten. Um ein Anhaften von Folienmaterial am Schweißdraht zu vermeiden, ist dieser normalerweise mit einer Schicht aus Polytetrafluorethylen versehen oder mit einer Folie aus mit Polytetrafluorethylen imprägniertem Glasgewebe überdeckt. Der Schweißdraht stützt sich an einer schmalen Längsseite eines Schweißbackens ab. Zur elektrischen und thermischen Isolation befinden sich zwischen dem Schweißbacken, der normalerweise aus Aluminium besteht, und dem Schweißdraht mehrere Lagen aus Glasfasergewebe und Folien aus Polytetrafluorethylen. Der Schweißdraht ist am Schweißbacken federnd eingespannt, wobei die Einspanneinrichtung auch die elektrische Kontaktierung beinhaltet.

Folienschweißmaschinen werden beispielsweise zum Verschließen von gefüllten Kunststoffbeuteln eingesetzt. Dabei treten immer wieder Probleme auf, die die Qualität der Schweißnaht beeinträchtigen. Die Schweißnaht kann unregelmäßig ausgebildet oder fehlerhaft sein. Dies kann bedingt sein durch örtliche Überhitzungen des Schweißdrahtes oder durch unregelmäßigen mechanischen Anpreßdruck. Beides kann bedingt sein durch versehentliches Verbiegen des Schweißdrahtes bei seiner Hand habung, insbesondere beim Auswechseln. Auch arbeiten die bekannten Schweißbacken verhältnismäßig träge und mit großem Wärmeverlust, da der Schweißdraht einen verhältnismäßig großen Querschnitt hat und ein Großteil der erzeugten Wärme in den Schweißbacken abgeführt wird, so daß dieser in der Regel gekühlt werden muß. Auch sind die bekannten Schweißeinrichtungen und Schweißdrähte nur unzureichend oder nicht an die speziellen Anforderungen der zu verschweißenden Folien, insbesondere zu verschließenden Verpackungen, anpaßbar.

Der Erfindung liegt die Aufgabe zugrunde, ein Schweißelement für eine Folienschweißmaschine zu schaffen, das relativ hochwertige Schweißnähte ermöglicht und den jeweiligen Anforderungen leicht anpaßbar ist.

Die Erfindung ist dadurch gekennzeichnet, daß der Heizleiter über seine gesamte Länge vollflächig fest mit dem Träger verbunden ist.

Anstelle des Heizdrahtes, der am Schweißbacken eingespannt wird, ist erfindungsgemäß eine Kombination aus dem Heizleiter und einem diesen tragenden Träger vorgesehen, wobei beide eine integrierte Einheit bilden. Dadurch, daß der Heizleiter über seine gesamte Länge vollflächig fest mit der Oberfläche des Trägers verbunden ist, kann es nicht mehr vorkommen, daß der Heizleiter an einzelnen Stellen am Untergrund nicht anliegt, so daß örtliche Überhitzungen, wie sie bei freiliegenden Stellen des bekannten Heizdrahtes vorkommen können, vermieden werden. Durch die feste Verbindung des Heizleiters mit dem Träger sind außerdem ungewollte örtliche Unebenheiten vermieden. Außerdem sind vorbestimmbare stabile thermische Verhältnisse erreicht, weil die Ableitung von Wärme aus dem Heizleiter in den Träger vorausbestimmbar und während der gesamten Standzeit des Heizelementes unverändert ist. Der Heizleiter dient zur direkten Beheizung des Folienmaterials.

Das erfindungsgemäße Schweißelement kann als solches auswechselbar unter elektrischer Kontaktierung an einem Schweißbacken befestigt werden. Dadurch, daß der Heizleiter mit dem Träger verbunden ist, können Deformationen des Heizleiters beim Auswechseln nicht auftreten.

Der Träger ist mit Vorteil ein selbsttragender, vorzugsweise biegesteifer Stab. Da der Träger die mechanischen Kräfte, die beim Schweißen und beim Auswechseln ausgeübt werden, aufnimmt, braucht der Heizleiter selbst keine besondere mechanische Stabilität zu besitzen. Es ist somit möglich, den Heizleiter nach Kriterien, die durch die Qualität der Schweißnaht gegeben sind, zu formen und auszubilden. Der Träger besteht vorzugsweise aus einem elektrisch nicht leitenden wärmebeständigen Material. Dadurch wirkt der Träger selbst als elektrischer Isolator. Mit besonderem Vorteil besitzt das Material des Trägers geringe Wärmeleitfähigkeit, so daß mit der Wärmeableitung verbundene Wärmeverluste gering sind. Als Material eignet sich besonders Keramik, wobei poröse Keramik besonders gute wärmeisolierende Eigenschaften besitzt. Die Materialstärke des Trägers liegt zweckmäßigerweise in der Größenordnung der Materialstärke eines Schweißbackens. Bekannte Schweißbacken haben beispielsweise eine Materialstärke von 8 mm, so daß die Materialstärke des Trägers ebenfalls bei ca. 8 mm oder darunter liegen kann.

Bei einer bevorzugten Ausführungform der Erfindung bestimmt die Oberflächenform des Trägers die Oberflächenform des Heizleiters. Durch entsprechende Ausgestaltung des Profilquerschnitts des Trägers kann somit das Profil des Heizleiters bestimmt werden. Um dies zu ermöglichen, ist es vorzugsweise vorgesehen, daß der Heizleiter parallele Flächen besitzt, insbesondere flach ausgebildet ist. Bei einer bevorzugten Ausführungsform ist der Heizleiter im Vergleich zu seiner Breite dünn, vorzugsweise dünner als 50 µm, insbesondere 10 bis 40 µm dick. Durch diese geringe Materialstärke des Heizleiters kann seine Wärmekapazität außerordentlich geringgehalten werden. Dadurch spricht der Heizleiter sehr flink an und besitzt eine außerordentlich geringe Trägheit. Der Träger kann im Bereich des Heizleiters jede gewünschte Oberflächenstruktur besitzen und beispielsweise flach, rund oder keilförmig ausgebildet sein. Der Heizleiter selbst besitzt aufgrund seiner im wesentlichen parallelen Flächen eine entsprechende Oberflächenform. Die Schichtdicke des Heizleiters ist über seine Breite gesehen, vorzugsweise im wesentlichen konstant. Die Breite des Heizleiters kann den Erfordernissen der Schweißnaht angepaßt werden und liegt in der Regel bei 1 bis 3 mm, insbesondere 1,5 bis 2,5 mm.

Bei einer bevorzugten Ausführungsform der Erfindung besteht der Heizleiter aus einem Schichtwiderstand. Das Widerstandsmaterial kann in pastenförmigem Zustand in der gewünschten Form und Schichtdicke aufgetragen werden, was beispielsweise den Vorteil mittels Siebdruck geschieht. Durch Einbrennen in an sich bekannter Weise wird die Widerstandsschicht verfestigt. Das Widerstandsmaterial besteht vorzugsweise aus einer Metallegierung mit hohem Tk-Wert, wobei Tk-Werte von 2500, insbesondere ca. 3000 ppm bevorzugt sind. Ein geeignetes Widerstandsmaterial besteht beispielsweise aus einer Silber/Palladiumpaste, die bei Temperaturen von 850 bis 900 °C eingebrannt werden kann. Ihr spezifischer Widerstand liegt beispielsweise bei ca. 1,8 Milliohm/mm². Die Schichtdicke der Widerstandsschicht kann durch die Viskosität des Widerstandsmaterials eingestellt werden. Auch ist eine mehrmalige Beschichtung, insbesondere durch Siebdruck, möglich. Mit besonderem Vorteil kann ein solcher mehrfacher Auftrag abschnittsweise erfolgen. Der Heizleiter kann entlang seiner Länge einen unterschiedlichen, insbesondere stufenförmig verschiedenen Querschnitt besitzen. Querschnittsänderungen des Heizleiters sind mit Vorteil durch unterschiedliche Schichthöhe bei konstanter Schichtbreite bedingt. So kann der erfindungsgemäße Heizleiter bei konstanter Materialzusammensetzung unterschiedliche Widerstände pro Längeneinheit aufweisen, was bei Stromdurchfluß zu einer unterschiedlichen Erhitzung führt. Durch diese Ausbildung ist es möglich, die Wärmeentwicklung des Heizleiters dem Wärmebedarf der zu verschweißenden Folien anzupassen, was insbesondere dann von Vorteil ist, wenn die zu verschweißenden Folien entlang der Schweißnaht aus einer unterschiedlichen Anzahl aus Einzelfolien bestehen. Dies ist beispielsweise bei Packungen mit Seitenfaltung der Fall, wo im Bereich der Seitenfaltung vier Folienlagen übereinanderliegen, wogegen es im Mittelbereich nur zwei Folienlagen sind. Dort, wo mehr Folienlagen miteinander zu verbinden sind, ist die Schichtstärke des Heizleiters mit Vorteil geringer als dort, wo nur wenige Lagen miteinander zu verbinden sind. In den Bereichen bzw. Abschnitten geringerer Schichtstärke ist der Widerstand des Heizleiters größer, so daß dort mehr Wärme entwickelt wird als in den Abschnitten größerer Schichtstärke, wo aufgrund des geringeren Widerstandes weniger Wärme entwickelt wird. Hinzu kommt, daß dort, wo der Folienstapel dünner ist, aufgrund der höheren Schichtstärke der Heizleiter dicker ist und umgekehrt. Dadurch werden Unterschiede in der Dicke der Folienlage während des Schweißvorganges mindestens teilweise durch die entsprechend gegenläufige unterschiedliche Schichtdicke des Heizleiters mindestens teilweise kompensiert. Dies wirkt sich positiv auf die Qualität der Schweißnaht aus. Durch die abgestufte Hitzeentwicklung werden einerseits örtliche Überhitzungen vermieden. Andererseits kann durch die dem unterschiedlichen Wärmebedarf angepaßte Wärmeentwicklung der Stromverbrauch gesenkt werden. Dies erlaubt es wiederum im Vergleich zu bekannten Schweißeinrichtungen, einen Wärmeüberschuß im wesentlichen zu vermeiden, so daß auch die Wärmeverluste außerordentlich gering sind. Dadurch kann eine Kühlung des Schweißbackens entfallen. Von besonderem Vorteil ist die Wärmeleitfähigkeit des Trägermaterials geringer als die des zu verschweißenden Folienmaterials, was beispielsweise bei poröser Keramik der Fall ist. Die erzeugte Wärme fließt damit bevorzugt in die Folie ab, ohne den Träger und insbesondere den Schweißbacken wesentlich zu erwärmen. Ist der Träger innen hohl, dann wird dieser Effekt noch verstärkt. Vorzugsweise ist der Träger deshalb rohrförmig ausgebildet.

Durch die geringen Wärmeverluste und insbesondere durch die geringe Wärmekapazität des Heizleiters ist das Heizelement flink, so daß die gewünschten Temperaturen sehr schnell erreicht und der Schweißvorgang beschleunigt durchgeführt werden kann. Dadurch kann die Taktzeit der Schweißvorrichtung erhöht oder bei üblicher Taktzeit die Kühldauer der Schweißnaht verlängert werden, was sich wiederum positiv auf Festigkeit und Aussehen der Schweißnaht auswirkt.

Bei einer bevorzugten Ausführungsform der Erfindung ist der Heizleiter mit einem Überzug geringer Haftfähigkeit versehen. Als solcher Überzug eignet sich besonders eine mineralische Glasur, insbesondere auf Basis von SiO₂, die auf das Widerstandsmaterial des Heizleiters aufgebrannt werden kann. Die Glasur ist vorzugsweise etwas breiter als der Heizleiter, so daß dessen seitliche Ränder von der Glasur überdeckt werden. Dadurch wird gleichzeitig eine Abrundung der Seitenkanten des Heizleiters erreicht, wodurch sauber ausgerundete Schweißnähte mit glatter Oberfläche erhalten werden.

Am Schweißbacken einer Folienschweißmaschine kann an der schmalen Längsseite, an der normalerweise ein Schweißdraht befestigt wird, eine Aufnahme für das Schweißelement vorgesehen sein. Aufgrund der bevorzugten biegesteifen Ausbildung des Trägers ist eine Spannvorrichtung wie bei einem Schweißdraht nicht erforderlich. Eine Klemmeinrichtung, die sich in der Regel einfacher und schneller bedienen läßt, ist bevorzugt. Die Klemmeinrichtung kann auch zur elektrischen Kontaktierung dienen. An den Enden der Schweißelemente können mit dem Heizleiter verbundene Kontaktbolzen vorgesehen sein, die eine schnelle und auch bei vielfachem Wechsel verschleißfreie Kontaktierung ermöglichen.

Zur Aufnahme des Trägers weist der Schweißbacken vorzugsweise eine dem Querschnitt des Trägers angepaßte Form auf, so daß der Träger vollflächig am Schweißbacken zur Anlage kommt. So kann die schmale Längsseite des Schweißbackens zur Aufnahme eines Trägers mit kreisförmigem Querschnitt beispielsweise halbrund ausgekehlt sein.

Weitere Merkmale und Einzelheiten der Erfindung ergeben sich aus der nachfolgenden Beschreibung von bevorzugten Ausführungsformen in Verbindung mit der Zeichnung und den Unteransprüchen. Hierbei können die einzelnen Merkmale jeweils für sich allein oder zu mehreren Kombinationen miteinander verwirklicht sein.

In der Zeichnung zeigen:
- Fig. 1: eine Ausführungsform der Erfindung mit in einen Schweißbacken einer Folienschweißmaschine eingesetztem Schweißelement,
- Fig. 2: einen Querschnitt durch die Ausführungsform nach Fig. 1 entlang der Linie II-II in vergrößertem Maßstab,
- Fig. 3: eine Ausführunsgform eines Schweißelementes mit einem den Folienlagen einer Verpackung angepaßtem Widerstandsprofil, und
- Fig. 4, 5 und 6: weitere Querschnittsformen eines Schweißelementes.

Bei den in der Zeichnung dargestellten Ausführungsformen der Erfindung weist eine Folienschweißmaschine einen heb- und absenkbaren Schweißbacken 1 auf, der mit entsprechenden Hubeinrichtungen verbunden ist. Der Schweißbacken 1 weist an seiner den zu verschweißenden Folien zugewandten schmalen Längsseite 2 eine Aufnahme für ein Schweißelement 3 auf. Diese Aufnahme umfaßt außer Befestigungsmitteln 4 eine Anlagefläche 5 für das Schweißelement 3, die der Außenform des Schweißelementes 3 angepaßt ist und an die das Schweißelement entlang seiner gesamten Länge zur Anlage bringbar ist.

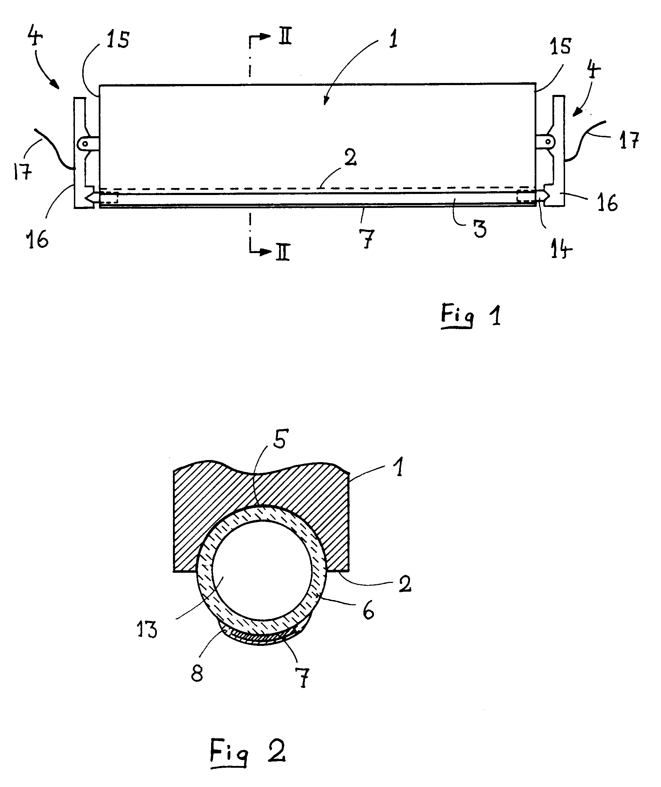

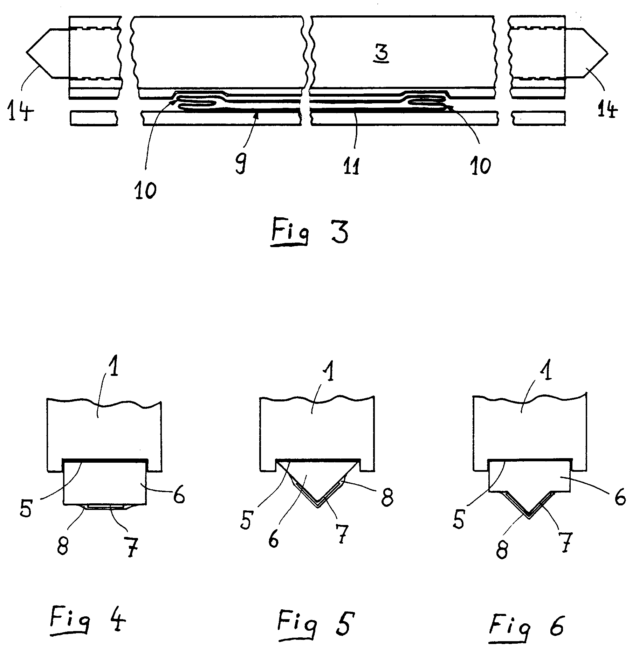

Der Schweißbacken 1 hat eine übliche Materialstärke von 8 mm und besteht aus Metall, insbesondere Aluminium. Das Schweißelement 3 weist einen biegesteifen Stab 6 aus einem hitzebeständigen, elektrisch nicht leitendem Material, insbesondere Keramik, auf und besitzt einen der gewünschten Schweißnaht angepaßte Querschnittsform. Diese kann rund, viereckig, dreieckig oder dergleichen sein. Der Stab 6 kann gegebenenfalls auch eine längsverlaufende Sicke aufweisen (vgl. Figuren 4, 5 und 6). Der Stab ist bei den in den Figuren 1 bis 3 dargestellten Ausführungsformen rohrförmig mit kreisrundem Querschnitt. Der Rohraußendurchmesser beträgt ca. 6 mm und der Rohrinnendurchmesser ca. 4,5 mm.

Der Stab 6 weist an seiner den Folien zugewandten Seite eine Beschichtung 7 aus einem Widerstandsmaterial auf, die sich über die gesamte Länge des Stabes 6 erstreckt. Die Breite der Beschichtung entspricht der für die jeweiligen Schweißnaht gewünschten Breite und beträgt im vorliegenden Fall 2 mm und ist über die gesamte Länge der Beschichtung konstant. Die Widerstandsschicht 7 besteht aus einer Metallegierung aus Silber/Palladium, die im Siebdruck pastenförmig aufgetragen und bei ca. 900 °C eingebrannt wurde. Es können mehrere Schichten übereinander aufgetragen sein. Die Schichtstärke einer einfachen Schicht beträgt ca. 12 µm. Um ein Ankleben von Folienmaterial zu vermeiden, ist die Widerstandsschicht 7 mit einem Antihaftbelag 8 versehen, der im vorliegenden Fall eine mineralische Glasur auf Basis SiO₂ ist. Der Streifen aus der Glasur 8 ist breiter als die Breite der Widerstandsschicht 7 und rundet die Kanten der Widerstandsschicht ab, wodurch beim Schweißvorgang kantige Eindrückungen in die Folie vermieden werden. Die Glasur 8 hat eine gute Wärmeleitfähigkeit und kann, da zwischen Glasur und Widerstandsmaterial keine trennende Luftschicht vorhanden ist, die Wärme aus dem Widerstandsmaterial gut in das Folienmaterial übertragen. Da die Glasur hart und hitzebeständig ist, ist sie weitgehend verschleißfrei und verleiht dem Schweißelement eine lange Standzeit.

Die Schichtstärke der Widerstandsschicht 7 kann je nach Wärmebedarf der zu verschweißenden Folien abschnittsweise variieren. Dies ist von Vorteil, wenn Folien verschweißt werden sollen, bei denen die Anzahl der Folienlagen über die Länge der Schweißnaht wechselt, wie dies beispielsweise beim Verschließen von gefüllten Verpackungen 9 mit Randfalten 10 der Fall ist. An den seitlichen Falten 10 liegen vier Folienlagen 11 übereinander und sind miteinander zu verschweißen, wogegen im Mittelbereich nur zwei Folienlagen 11 zu verschweißen sind. Dies erfordert im vierlagigen Bereich eine zur Verfügungstellung größerer Wärmemengen als im zweilagigen Bereich. Hierzu sind im zweilagigen Bereich zwei Schichten an Metallpaste aufgetragen, wogegen im vierlagigen Bereich nur eine Schicht aufgetragen ist, so daß die Schichtstärke der Widerstandschicht im zweilagigen Folienbereich doppelt so hoch ist wie im vierlagigen Bereich. Im zweilagigen Folienbereich ist dadurch der Widerstand des Schichtwiderstandes 7 geringer, so daß hier weniger Wärme entwickelt wird, wogegen der Abschnitt des Schichtwiderstandes im vierlagigen Folienbereich einen höheren Widerstand aufweist, so daß hier beim Stromdurchfluß mehr Wärme entwickelt wird, die zur Verschweißung der vier Lagen ausreicht. Durch die abschnittsweise abgestufte Wärmeentwicklung wird ein Verbrennen der Folien oder eine Schädigung der Naht an den dünnen Stellen vermieden.

Die Folien haben in der Regel eine Stärke von 100 µm oder weniger. Die Stärke der Widerstandsschicht 7 kann in der Größenordnung der Folienstärke liegen und ist vorzugsweise kleiner, vorzugsweise dünner als 50 µm. Da die Schichtstärke dort größer ist, wo die Stärke der Folienlagen geringer ist, wird ein den Folienlagen angepaßtes Profil entlang des Schichtwiderstandes 7 erhalten, das die Schichtunterschiede der Folienlagen mindestens teilweise kompensiert und einen gleichmäßigen Anpreßdruck beim Schweißvorgang ermöglicht. Je nach Art des Widerstandsmaterials und Viskosität der Paste können beliebige Höhenunterschiede gestaltet werden.

Da der Schichtwiderstand 7 über seine gesamte Fläche mit dem Trägerstab fest verbunden ist, ist die Wärmeableitung in den Stab 6 entlang der einzelnen Widerstandsabschnitte bekannt und kann somit eingerechnet werden. Örtliche Überhitzungen oder Abschnitte mit unzureichenden Temperaturen werden somit vermieden. Besteht der Trägerstab 6 aus einem bevorzugt schlecht wärmeleitenden Material, wie dies insbesondere bei poröser Keramik der Fall ist, dann ist der Wärmeverlust in dem Trägerstab ohnehin gering, insbesondere dann, wenn die Wärmeleitfähigkeit des Folienmaterials größer ist als die des Materials des Trägers. Die Übertragung von Wärme in den Schweißbacken 1 ist vernachlässigbar, so daß dieser nicht besonders gekühlt zu werden braucht. Durch die geringen Wärmeverluste und die Möglichkeit der abschnittsweise abgestuften Wärmeentwicklung ist der gesamte Energiebedarf geringer als bei den bekannten Schweißbacken mit eingespanntem Schweißdraht. Dadurch kann der Schweißvorgang schneller ablaufen, so daß die Taktzeit im Vergleich zu bekannten Schweißmaschinen verringert werden kann. Es kann auch bei bestehenden Maschinen mit vorgegebener Taktzeit die Heizphase zugunsten der Kühlphase verkürzt werden. Eine Kühlung kann sich direkt auf die Schweißnaht beschränken, solange der Folienpack noch von Niederhaltern der Schweißmaschine niedergedrückt ist. Dies wirkt sich positiv auf die Qualität der Schweißnaht aus, insbesondere dann, wenn sie bei gefüllten Packungen unter Spannung steht.

Die stabförmigen Schweißelemente 3 sind am Schweißbacken 1 leicht auswechselbar befestigt. Es können für jede Länge und Art der Schweißnaht optimal angepaßte Schweißelemente vorrätig gehalten und schnell ausgewechselt werden. Hierzu sind an den Enden 12 der Schweißelemente 3 Vertiefungen bzw. die Lochenden 13 an der Innenseite mit Widerstandsmaterial oder elektrisch gut leitendem Material beschichtet, um eine Kontaktierung zu ermöglichen. In diese Vertiefungen bzw. Löcher 13 sind Kontaktbolzen 14, die an ihren freien Enden zugespitzt sind, eingelötet. Am Schweißbacken 1 sind an dessen Schmalseiten 15 im Bereich der Anlagefläche 5 federbelastete Kipphebel 16 befestigt, die mit elektrischen Zuleitungen 17 verbunden sind. Zwischen diese Kipphebel 16 kann das Schweißelement 3 eingeklemmt werden. Um bei Schweißelementen mit kreisförmigem Querschnitt die richtige Lage am Schweißbacken zu gewährleisten, sind die Kontaktbolzen 14 und Kipphebel 16 an ihren Berührungsflächen mit assymmetrisch ausgebildeten Verdrehsicherungen versehen. Bei Schweißelementen mit ebener Auflage, wie sie in den Figuren 4, 5 und 6 dargestellt sind, erübrigt sich eine derartige Verdrehsicherung.

## Patentansprüche

1. Schweißelement für die Folienschweißung mit einem langgestreckten elektrischen Heizleiter (7) und einem diesen stützenden Träger (6), dadurch gekennzeichnet, daß der Heizleiter (7) über seine gesamte Länge vollflächig fest mit dem Träger verbunden ist.

2. Schweißelement nach Anspruch 1, dadurch gekennzeichnet, daß es auswechselbar unter elektrischer Kontaktierung an einem Schweißbacken (1) befestigbar ist.

3. Schweißelement nach Anspruch 1 oder 2, dadurch gekennzeichnet, daß der Träger (6) ein selbsttragender, vorzugsweise biegesteifer, Stab ist.

4. Schweißelement nach einem der vorhergehenden Ansprüche, dadurch gekennzeichnet, daß der Träger aus elektrisch nicht leitendem, wärmebeständigem Material, insbesondere aus Keramik besteht.

5. Schweißelement nach einem der vorhergehenden Ansprüche, dadurch gekennzeichnet, daß der Heizleiter zueinander parallele Flächen besitzt, insbesondere im wesentlichen flach ausgebildet ist.

6. Schweißelement nach einem der vorhergehenden Ansprüche, dadurch gekennzeichnet, daß der Heizleiter (7) im Vergleich zu seiner Breite dünn ist, vorzugsweise dünner als 50 µm.

7. Schweißelement nach einem der vorhergehenden Ansprüche, dadurch gekennzeichnet, daß der Heizleiter (7) ein elektrischer Schichtwiderstand ist.

8. Schweißelement nach einem der vorhergehenden Ansprüche, dadurch gekennzeichnet, daß die Querschnittsfläche und damit der Widerstand des Heizleiters in Längsrichtung abschnittweise verschieden ist.

9. Schweißelement nach einem der vorhergehenden Ansprüche, dadurch gekennzeichnet, daß der Heizleiter (7) mit einem Material von geringer Haftfähigkeit gegenüber Folienmaterial beschichtet ist, insbesondere mit einer mineralischen Glasur (8) überzogen ist.

10. Schweißelement nach einem der vorhergehenden Ansprüche in Verbindung mit einem Schweißbacken (1), dadurch gekennzeichnet, daß der Schweißbacken (1) eine der Form des Schweißelementes (3) angepaßte Anlagefläche (5) für das Schweißelement (3) aufweist.

11. Schweißelement nach einem der vorhergehenden Ansprüche in Verbindung mit einem Schweißbacken (1), dadurch gekennzeichnet, daß der Schweißbacken Befestigungselemente (4), insbesondere Klemmelemente (16), zur lösbaren Halterung des Schweißelementes (3) aufweist.
